(19) Europäisches Patentamt European Patent Office Office européen des brevets

(11) **EP 2 257 509 B1**

(12) **FASCICULE DE BREVET EUROPEEN**

(45) Date de publication et mention de la délivrance du brevet:
**18.07.2018 Bulletin 2018/29**

(21) Numéro de dépôt: **09733596.2**

(22) Date de dépôt: **19.03.2009**

(51) Int Cl.:
*C04B 35/109* *(2006.01)*     *C04B 35/111* *(2006.01)*
*C04B 35/117* *(2006.01)*     *C04B 35/119* *(2006.01)*
*C04B 35/626* *(2006.01)*     *C04B 35/628* *(2006.01)*
*C09K 3/14* *(2006.01)*

(86) Numéro de dépôt international:
**PCT/FR2009/050471**

(87) Numéro de publication internationale:
**WO 2009/127796 (22.10.2009 Gazette 2009/43)**

(54) **GRAINS FONDUS ET REVETUS DE SILICE**

MIT KIESELSÄURE BESCHICHTETE GESCHMOLZENE KÖRNER

MELTED GRAINS COATED WITH SILICA

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **21.03.2008 FR 0851831**

(43) Date de publication de la demande:
**08.12.2010 Bulletin 2010/49**

(73) Titulaire: **Saint-Gobain Centre de Recherches et d'Etudes Européen 92400 Courbevoie (FR)**

(72) Inventeurs:
• **MARLIN, Samuel F-13750 Plan d'Orgon (FR)**

• **PETIGNY, Sylvain F-84740 Velleron (FR)**

(74) Mandataire: **Nony 11 rue Saint-Georges 75009 Paris (FR)**

(56) Documents cités:
EP-A- 1 149 060     WO-A-2006/032982
WO-A1-2004/094554     US-A- 3 029 160
US-A- 3 525 600     US-A- 5 042 991
US-A- 5 085 671     US-A- 5 633 084
US-A1- 2006 134 421

**Description**

DOMAINE TECHNIQUE

La présente invention concerne des grains fondus, tels que des grains fondus d'alumine, des grains d'alumine-zircone ou des grains fondus contenant de l'oxyde de magnésium. L'invention concerne également un outil abrasif comportant des grains conformes à l'invention et un procédé de fabrication de grains selon l'invention.

ETAT DE LA TECHNIQUE

On classe généralement les outils abrasifs selon le mode de mise en forme des grains céramiques qui les constituent : abrasifs libres, utilisés en projection ou en suspension, sans support ; abrasifs appliqués où les grains sont fixés sur un support de type toile, papier ou film polymère et abrasifs agglomérés sous forme de meules circulaires, de bâtons, etc.

Dans le cas des abrasifs agglomérés, les grains abrasifs sont pressés avec un liant organique, par exemple une résine phénolique, ou vitreux, par exemple avec un liant constitué d'oxydes, notamment un liant silicaté. Ces grains doivent présenter eux-mêmes de bonnes propriétés mécaniques à l'abrasion, notamment une bonne ténacité et/ou dureté, et donner lieu à une bonne cohésion avec le liant (solidité de l'interface).

On trouve aujourd'hui différentes familles de grains abrasifs permettant de couvrir une large gamme d'applications et de performances : Les grains synthétisés par fusion des matières premières, dits "grains fondus", offrent un excellent compromis qualité / coût de fabrication.

Dans la présente description, sauf mention contraire, toutes les compositions d'un grain sont données en pourcentages massiques, sur la base de la masse totale du grain.

Dans la gamme des grains fondus, les matériaux à base d'alumine et de zircone sont connus depuis US-A-3,181,939. Ces grains sont généralement composés de 10 à 60% de zircone, de 0 à 10% d'un additif, le complément étant l'alumine. En pratique, le taux de zircone des produits du commerce se situe soit autour de 25%, soit autour de la valeur de l'eutectique alumine-zircone située à environ 42% de zircone, généralement entre 35 et 50%, comme décrit dans le brevet US-A-3,891,408.

US-A-4,457,767 décrit également des grains fondus. A titre d'exemple, on peut citer les grains commercialisés par la Société Saint-Gobain (France) sous l'appellation NZPlus®. Ces grains contiennent typiquement 39 % en masse de zircone et 0,8 % de $Y_2O_3$, moins de 0,5 % d'impuretés, le complément étant de l'alumine. Des mélanges de ces grains sont largement utilisés pour les abrasifs appliqués ou pour les meules abrasives à liant organique, notamment dans des opérations à taux d'enlèvement de matière élevés (dégrossissage, tronçonnage...), notamment sur acier inox.

On connaît encore de EP 1 613 709 des grains comportant quelques pourcents de MgO, le complément étant $Al_2O_3$. Ces grains alumineux contenant de l'oxyde de magnésium sont fabriqués par fusion de matières premières. La matière fondue est ensuite refroidie, de préférence rapidement pour favoriser l'obtention de structures fines et orientées, par exemple au moyen d'un dispositif de coulée entre plaques minces métalliques tel que celui présenté dans le brevet US-A-3,993,119. Le matériau refroidi est enfin broyé, par exemple au moyen de broyeurs à rouleaux, puis tamisé et classifié en séries de distributions granulométriques, ou « grits », répondant à des normes précises, par exemple FEPA.

US 5 042 991 décrit un revêtement obtenu à partir de silice hydrophobe mise en suspension dans un liquide non aqueux.

WO 2006/032 982 décrit un procédé pour revêtir des grains vitréophiles. L'alumine n'est pas un matériau vitréophile.

US-A-3,525,600 décrit le revêtement de la surface d'un composé abrasif avec un silicate et le traitement de la surface revêtue avec une résine silicone.

US-A-2006/134421 décrit des particules abrasives revêtues d'un revêtement consistant en un agent liant aqueux à base de silice et d'un oxyde complexe.

Pour obtenir une meilleure adhésion des grains abrasifs avec le liant, il est connu d'appliquer à leur surface un revêtement, par exemple à base d'oxyde de magnésium ou de manganèse (US 4,913,708) ou encore à base d'hydrate d'alumine et de silicate de sodium (EP 0 856 037). Cependant, ces revêtements peuvent présenter des inconvénients, notamment des problèmes de toxicité dans le cas de l'oxyde de manganèse ou de vieillissement prématuré dans le cas de l'hydrate d'alumine ou du silicate de sodium à cause de leurs propriétés hygroscopiques.

L'application de silice à la surface de grains abrasifs a également été préconisée, par EP 0 417 729, mais pour des grains frittés fabriqués par voie sol-gel et destinés à des meules vitrifiées, et non pour des grains fondus.

La modification des performances des grains induite par l'application d'un revêtement peut cependant être très différente selon que les grains sont fondus ou frittés. Sans pouvoir l'expliquer théoriquement, EP 0 417 729 indique ainsi que l'application des mêmes traitements, de la même manière, sur des grains abrasifs alumineux conduit, avec un liant vitreux, à des outils abrasifs qui ne présentent pas les mêmes performances au broyage selon que les grains ont été fabriqués par voie sol-gel ou pas.

Par ailleurs, la demande de brevet japonais No. 63-98299 décrit un procédé permettant de fabriquer un revêtement à base de silice présentant une morphologie écaillée. Ce procédé comporte une immersion de grains de base dans un sol de silice, une élimination de l'excès de silice, puis un traitement thermique à haute température. Cette demande de brevet indique qu'il est généralement difficile d'utiliser de la silice colloïdale pour revêtir des grains abrasifs qui sont des agrégats de fines particules.

US 3,029,160 décrit des grains abrasifs revêtus aptes à être projetés dans un champ électrostatique. Enfin, les procédés mis en oeuvre pour revêtir des grains fondus sont généralement complexes et coûteux.

Il existe un besoin permanent pour des nouveaux grains abrasifs présentant une excellente adhésion avec les liants, notamment les liants organiques, et/ou une ténacité élevée. Un but de l'invention est de répondre à ce besoin.

Il existe également un besoin pour un nouveau procédé permettant de fabriquer de manière efficace et à coût réduit de tels grains abrasifs. Un autre but de l'invention est de répondre à ce besoin.

RESUME DE L'INVENTION

L'invention propose un grain revêtu selon la revendication 1.

Comme on le verra plus en détail dans la suite de la description, un tel revêtement de silice permet d'obtenir une bonne résistance à l'impact et à la fracturation et/ou une bonne adhésion avec le liant.

Un grain selon l'invention peut en particulier également comporter une ou plusieurs des caractéristiques optionnelles suivantes :

- La masse du revêtement représente plus de 0,01%, plus de 0,1% et/ou moins de 2%, moins de 0,75%, voire moins de 0,3% de la masse du grain de base ;
- Le revêtement recouvre sensiblement toute la surface dudit grain de base ;
- Le revêtement ne présente pas de craquelures ou ni d'écailles ;
- Le revêtement est en contact avec la surface du grain de base, aucune couche intermédiaire ne séparant ledit revêtement et ladite surface ;
- Le grain de base comporte au moins 1 % de zircone, de magnésie ou d'un mélange de zircone et de magnésie, en pourcentage massique sur la base de la masse du grain de base ;
- La teneur massique totale en additif dans la composition du grain de base est inférieure à 10 %.

L'invention concerne également un mélange de grains comportant des grains revêtus selon l'invention, la taille desdits grains revêtus étant supérieure à 45 $\mu$m, supérieure à 400 $\mu$m ou supérieure à 500 $\mu$m et/ou inférieure à 3,35 mm ou inférieure à 2 mm ou inférieure à 600 $\mu$m.

L'invention concerne aussi un outil abrasif comportant des grains abrasifs liés par un liant, agglomérés ou déposés sur un support, au moins une partie desdits grains abrasifs étant conformes à l'invention. Le liant peut en particulier être un liant organique.

L'invention concerne aussi un procédé de fabrication selon la revendication 9. Un procédé selon l'invention selon l'invention peut en particulier également comporter une ou plusieurs des caractéristiques optionnelles suivantes :

- Avant l'étape 2), les grains de base fondus subissent un traitement thermique, dit « préalable », notamment effectué à une température supérieure à 600 °C, voire supérieure à 800 °C, voire supérieure à 1000 °C et/ou inférieure à 1550°C, voire inférieure à 1350 °C, voire inférieure à 1250 °C. La durée du traitement thermique préalable peut être par exemple supérieure à 30 minutes, voire supérieure à 1 heure, ou supérieure à 3 heures et/ou inférieure à 10 heures. Les grains de base fondus peuvent alternativement ne subir aucune étape de traitement thermique préalablement à l'étape 2) ;
- A l'étape 2), les grains de base sont mélangés avec une quantité de suspension supérieure à 0,5 g, supérieure à 0,75 g, voire supérieure à 1,0 g et/ou inférieure à 5 g, inférieure à 4 g, inférieure à 3 g, voire inférieure à 2 g, de suspension pour 100 g de grains de base. La suspension de silice peut avoir une concentration inférieure à 25%, voire inférieure à 10%, voire inférieure à 5% de silice.
- ledit traitement thermique de l'étape 4) est effectué à une température supérieure à 200 °C, supérieure à 300 °C et/ou inférieure à 1500°C, inférieure à 1350°C, inférieure à 1000 °C, voire inférieure à 500 °C ou inférieure à 450 °C. Ledit traitement thermique est effectué pendant une durée supérieure à 30 minutes, supérieure à 1 heure et/ou inférieure à 24 heures ou inférieure à 10 heures;
- Les grains de base fondus ne subissent aucune étape intermédiaire entre l'étape 2) et l'étape 3).

DEFINITIONS

Dans un souci de clarté, on appelle "grain revêtu" un grain comportant un "grain de base" en un matériau fondu et un revêtement comportant de la silice, recouvrant, au moins partiellement, ledit grain de base.

Par "revêtement", on entend une couche de matière solide s'étendant à la surface d'un grain de base. Le revêtement peut pénétrer dans les pores éventuels à la surface du grain de base. Un revêtement est cependant délimité par une interface avec le grain de base marquant une rupture dans la composition chimique.

Par « grain fondu », on entend un grain obtenu suivant un procédé comportant une solidification, par refroidissement, d'une matière en fusion.

Une « matière en fusion » est une masse qui, pour conserver sa forme, doit être contenue dans un récipient. Une matière en fusion est généralement liquide. Cependant, elle peut contenir des particules solides, mais en quantité insuffisante pour qu'elles puissent structurer ladite masse.

Par "mélange de grains", on entend un mélange de grains coulable, c'est-à-dire ne présentant pas de rigidité intrinsèque. Pour des grains de petite taille, on parle classiquement de "poudre".

Les grains revêtus selon l'invention peuvent être sous la forme d'un mélange de grains, notamment sous la forme d'un mélange de grains prêt à être utilisé comme matière première pour la fabrication d'un outil abrasif, ou sous une forme où ces grains sont immobilisés les uns par rapport aux autres, par exemple parce qu'ils sont fixés sur une toile ou liés entre eux afin de constituer une masse rigide, notamment pour constituer un abrasif aggloméré.

Par "suspension colloïdale de silice", on entend classiquement une suspension de particules de silice dans un liquide, par exemple en milieu aqueux, les particules présentant des dimensions de quelques nanomètres à quelques centaines de nanomètres selon qu'elles sont agglomérées ou non.

Classiquement, la "taille" d'un grain de base ou d'un grain revêtu correspond à la maille de tamis standard minimale à travers laquelle ledit grain peut passer.

La "taille" d'une particule de silice en suspension correspond à la taille donnée classiquement par une caractérisation de distribution granulométrique réalisée avec un granulomètre laser, par exemple du type Partica LA-950 de la société HORIBA.

Lorsqu'il est fait référence à des grits ou à la norme FEPA, il est fait référence à la norme FEPA Standard 42-GB-1984.

Les teneurs en oxydes des grains se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments sus-mentionnés.

Lorsqu'une composition chimique d'un grain de base fondu est décrite, « Autres » désigne tous les composés qui ne sont pas mentionnés explicitement par ailleurs, et notamment les impuretés et les "additifs".

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de sodium et autres alcalins, fer, vanadium et chrome sont des impuretés. L'oxyde d'hafnium, naturellement présent dans les sources de zircone à des teneurs inférieures à 2 %, n'est pas considéré comme une impureté lorsque le produit souhaité doit comprendre de la zircone ou de la zircone et de l'oxyde d'hafnium. Le carbone résiduel, exprimé comme C, fait partie des impuretés des grains selon l'invention.

Le terme « additif » recouvre tous les additifs utilisés pour la fabrication de grains alumine ou alumine-zircone fondus, notamment les stabilisants de la zircone, et en particulier l'oxyde d'yttrium et l'oxyde de titane. En outre, sont inclus les oxydes de magnésium, de calcium et d'autres oxydes de terres rares, en particulier celui de néodyme, mais aussi ceux de lanthane, de cérium, de dysprosium et d'erbium. Le terme « additif » comprend également les mélanges de ces espèces. De préférence, la teneur massique totale en additif dans la composition des grains de base est inférieure à 10 %, voire inférieure à 5 %, 3 %, 1 %, 0,8%, 0,5 % ou 0,2 %.

D'autres caractéristiques et avantages de la présente invention apparaîtront à la lecture de la description détaillée qui va suivre.

DESCRIPTION DETAILLEE

Le grain de base peut présenter différentes compositions, et en particulier être constitué d'alumine, notamment a, d'alumine-zircone, d'alumine-magnésie, pourvu qu'il comporte au moins 40 % en masse d'alumine.

Le grain de base peut comporter une teneur massique en alumine supérieure à 45 %, voire supérieure à 65 % ou même supérieure à 92 % et/ou inférieure à 98,5 %, voire inférieure à 80 %, voire inférieure à 65 %.

De préférence, le grain de base comporte au moins 1 % de zircone, de magnésie ou d'un mélange de zircone et de magnésie.

Le grain de base peut comporter une teneur en zircone ($ZrO_2$ + $HfO_2$) supérieure à 15 %, supérieure à 20 %, voire supérieure à 35 % et/ou inférieure à 50 %, voire inférieure à 30 %. Dans un mode de réalisation particulier, le grain de base ne comporte pas de zircone.

Le grain de base peut également comporter de la magnésie (MgO), la teneur massive en magnésie étant de préférence supérieure à 1,5 %, 2,2 %, 2,3 %, 2,45 % et/ou inférieure à 6,5 %, 4,0 %, voire 2,5 %.

Le grain de base peut, en particulier, être un grain tel que ceux objet de la demande de brevet WO/2004/094554. Le grain de base fondu présente l'analyse chimique suivante, en pourcentages en masse et pour un total de 100 % :

| | |
|---|---|
| $Al_2O_3$ : | 45 - 65% |
| $ZrO_2$ + $HfO_2$ : | 35 - 50 % |
| Autres : | 0 - 12,0 % |

Selon un autre mode de réalisation, le grain de base fondu présente l'analyse chimique suivante, en pourcentages en masse et pour un total de 100 % :

| | |
|---|---|
| $Al_2O_3$ : | 65 - 80% |
| $ZrO_2$ + $HfO_2$ : | 15 - 30 % |
| Autres : | 0 - 12,0 % |

Selon un autre mode de réalisation, le grain de base fondu présente l'analyse chimique suivante, en pourcentages en masse et pour un total de 100 % :

| | |
|---|---|
| $Al_2O_3$ : | 92,0 - 98,5% |
| MgO : | 1,5 - 6,5 %, |
| Autres : | < 2,0 %. |

La teneur totale en impuretés du grain de base est de préférence inférieure à 0,5 %, voire 0,4 %. De préférence, la teneur de chacune des impuretés est inférieure à 0,1 %.

La silice et l'oxyde de sodium en particulier sont connus pour être préjudiciables dans un grain de base fondu, et leurs teneurs respectives devraient être limitées à l'état de traces dans le grain de base, introduites à titre d'impuretés dans les matières premières. La présence de silice conduit en effet à la formation d'une face vitreuse qui modifie les propriétés abrasives et la dureté du grain de base fondu. La présence d'oxyde de sodium, même à des teneurs faibles, conduit à la formation de béta alumine. Or cette forme cristallographique de l'alumine réduit les propriétés abrasives des grains. De préférence, $Na_2O$ < 0,1 %, voire $Na_2O$ < 0,05 %.

Les teneurs en CaO, $TiO_2$, $Fe_2O_3$ ou en $Cr_2O_3$ dans le grain de base sont de préférence chacune inférieures à 0,5%, de préférence inférieures à 0,3 %.

Le carbone résiduel peut être inférieur à 800 ppm, inférieur à 500 ppm, voire inférieur à 250 ppm, voire inférieur à 200 ppm, ce qui correspond à des conditions de fusion réductrices.

De préférence, les grains de base fondus présentent une porosité mesurée par Pycnomètre Hélium inférieure à 3%.

De préférence, la masse du revêtement est supérieure à 0,01%, voire supérieure à 0,03%, voire supérieure à 0,1% et/ou inférieure à 2%, voire inférieure à 0,75%, voire inférieure à 0,3%, en pourcentages massiques sur la base du grain de base.

Le revêtement est constitué à 100 % de silice, en pourcentages massiques sur la base de la masse du revêtement.

Dans un mode de réalisation particulier, le revêtement peut recouvrir sensiblement toute la surface du grain de base.

Le revêtement peut ne pas présenter de craquelures ou d'écailles, notamment lorsqu'il est appliqué suivant l'étape 2) du procédé de fabrication décrit ci-après.

Les grains fondus selon la technique antérieure peuvent comporter, à titre d'impuretés, des teneurs en silice correspondant aux teneurs en silice d'un grain revêtu selon l'invention. Les grains revêtus selon l'invention se distinguent cependant des grains selon la technique antérieure du fait qu'ils présentent un revêtement dont la teneur en silice est très supérieure à la teneur en silice des grains de base fondus.

Dans un mode de réalisation, le revêtement est en contact avec la surface du grain de base, c'est-à-dire n'en n'est pas séparé par une couche intermédiaire.

La silice est hydrophile, c'est-à-dire humectable à l'eau. La silice est naturellement hydrophile et il est normalement nécessaire de la traiter spécifiquement pour la rendre hydrophobe.

La silice du revêtement peut être amorphe, partiellement cristallisée, voire totalement cristallisée.

Il est décrit également un mélange de grains comportant, voire constitué par, des grains revêtus.

De préférence, les grains revêtus d'un mélange de grains ont un grit supérieur au Grit 4, supérieur au Grit 12, supérieur au Grit 16 et/ou inférieur au Grit 220, inférieur au Grit 120, ou inférieur au Grit 80.

De préférence, la taille des grains revêtus est supérieure à 45 $\mu$m, 150 $\mu$m, 300 $\mu$m, 400 $\mu$m, 500 $\mu$m et/ou inférieure à 3,35 mm, 2,8 mm, 2 mm, 1,4 mm, 1 mm, 850 $\mu$m, voire 600 $\mu$m.

Il est décrit encore un outil abrasif comportant des grains abrasifs liés par un liant et agglomérés, par exemple sous forme de meule, ou déposés sur un support, par exemple déposés en couche un support souple..

L'outil abrasif peut être en particulier une meule de rectification, une meule de précision, une meule d'affûtage, une meule de tronçonnage, une meule de taillage dans la masse, une meule d'ébarbage ou de dégrossissage, une meule d'entraînement, une meule portable, une meule pour fonderies, une meule à forets, une meule sur tiges, une meule cylindrique, à cônes, à disques ou à segments ou tout autre type de meule.

Les procédés de fabrication de tels outils abrasifs sont bien connus.

Les outils abrasifs agglomérés peuvent être formés par pressage en forme d'un mélange de grains abrasifs et d'un liant.

Dans un outil abrasif, le liant peut être vitrifié (par exemple, un liant constitué d'oxydes, essentiellement silicaté) ou organique. Un liant organique est bien adapté et préféré.

Le liant peut être notamment une résine thermodurcissable. Il peut être choisi dans le groupe constitué par les résines phénoliques, époxy, acrylate, polyester, polyimide, polybenzimidazole, polyuréthane, phénoxy, phénol-furfural, analine-formaldéhyde, urée-formaldéhyde, cresol-aldéhyde, resorcinol-aldéhyde, urée-aldéhyde, mélamine-formaldéhyde, et des mélanges de ceux-ci.

Habituellement, le liant représente entre 2 et 60%, de préférence entre 20% et 40% en volume du mélange.

Le liant peut également incorporer des charges organiques ou inorganiques, comme des charges inorganique hydratées (par exemple du trihydrate d'aluminium ou de la bohmite) ou non (par exemple de l'oxyde de molybdène), de la cryolite, un halogène, du fluorspar, du sulfure de fer, du sulfure de zinc, de la magnésie, du carbure de silicium, du chlorure de silicium, du chlorure de potassium, du dichlorure de manganèse, du fluoroborate de potassium ou de zinc, du fluoroaluminate de potassium, de l'oxyde de calcium, du sulfate de potassium, un copolymère de chlorure de vinylidène et de chlorure de vinyle, du chlorure de polyvinylidène, du chlorure polyvinyle, des fibres, sulfures, chlorures, sulfates, fluorures, et des mélanges de ceux-ci. Le liant peut également contenir des fibres de renfort comme des fibres de verre.

L'invention concerne encore un procédé de fabrication selon la revendication 9. Comme on le verra plus en détail dans la suite de la description, ce procédé permet, de manière très simple, de fabriquer des grains revêtus selon l'invention et qui présentent donc à la fois une bonne résistance à l'impact et une bonne adhésion avec les liants, et notamment avec les liants organiques.

A l'étape 1), les grains de base fondus peuvent être fabriqués selon tout procédé conventionnel de fabrication de grains fondus d'alumine ou d'alumine-zircone, en particulier au moyen d'un arc court, avec une énergie de fusion avant coulée d'au moins 1500 kwh par tonne de matières premières. Les conditions de fusion peuvent être telles que les grains de base présentent une teneur maximale en carbone de 800 ppm. Les grains de base peuvent en particulier être fabriqués suivant un procédé comprenant les étapes successives suivantes :

a) mélange de matières premières ;

b) fusion, classiquement dans un four électrique, desdites matières premières mélangées jusqu'à obtention d'une matière en fusion ;

c) refroidissement par trempe de ladite matière en fusion, de préférence de manière que la matière en fusion soit entièrement solidifiée en moins de 3 minutes, jusqu'à obtention d'une masse solide ;

d) broyage de ladite masse solide de manière à obtenir des grains de base fondus, et, optionnellement, classification granulométrique desdits grains de base.

La forme des grains est variable et peut être sélectionnée selon les applications.

Dans un mode de réalisation, aucune couche intermédiaire n'est appliquée sur les grains de base fondus avant l'étape 2).

Les grains de base peuvent cependant être lavés préalablement à l'étape 2). Ce lavage préalable peut être réalisé à l'eau ou bien à l'aide d'une solution aqueuse acide, par exemple d'acide chlorhydrique.

Dans un mode de réalisation, les grains de base fondus ne subissent aucune étape de traitement thermique préalablement à l'étape 2). Avantageusement, le procédé en est simplifié.

Dans un mode de réalisation, le traitement thermique préalable à la fin de l'étape 2) de recouvrement est la seule opération intermédiaire entre l'étape 1) et l'étape 2).

Dans un autre mode de réalisation, les grains de base fondus subissent au contraire une étape de traitement thermique préalablement à l'étape 2). Ledit traitement thermique préalable peut en particulier être effectué à une température supérieure à 600 °C, voire supérieure à 800 °C, voire supérieure à 1000 °C et/ou inférieure à 1550°C, voire inférieure à 1350 °C, voire inférieure à 1250 °C.

Ce traitement thermique peut être effectué sous air, par exemple à pression atmosphérique.

Avantageusement, un tel traitement permet d'ajuster le niveau de ténacité et de friabilité du grain de base avant la réalisation dudit revêtement.

A l'étape 2), les grains de base sont recouverts, d'une suspension contenant de la silice.

De préférence, les grains de base sont mélangés avec une quantité limitée de suspension, de préférence supérieure à 0,5 g, supérieure à 0,75 g, voire supérieure à 1,0 g et/ou inférieure à 5 g, inférieure à 4 g, inférieure à 3 g, inférieure à 2 g, de suspension pour 100 g de grains. Une proportion massique de 1g de suspension pour 100 g de grains de base est bien adaptée. De telles quantités de suspension permettent d'obtenir un bon recouvrement des grains de base par la suspension de silice.

Le mélange ainsi obtenu présente la consistance d'un « sable humide » et peut avantageusement être mis à sécher sans traitement intermédiaire. Avantageusement également, après séchage, les grains revêtus n'adhèrent pas les uns aux autres ou si faiblement qu'ils peuvent être séparés facilement, sans broyage.

La suspension de silice peut avoir une concentration inférieure à 25%, voire 10%, voire 5% de silice.

La suspension de silice est de préférence utilisée dans des proportions permettant un dépôt, sur les grains de base, d'un pourcentage massique de silice supérieur ou égal à 0,01 %, 0,03 %, 0,05 % et/ou inférieur ou égal à 5 %, 3 %, 2 %, 1 %, 0,75 %, 0,3 %, voire 0,1 %, sur la base des grains de base.

La suspension est une suspension colloïdale de silice. Elle peut contenir des additifs tels que des surfactants, tensioactifs ou agents complexant.

De préférence, la suspension colloïdale est nanométrique, c'est-à-dire comporte des particules de silice présentant une taille comprise entre 2 et 200 nanomètres. Avantageusement, ceci permet d'avoir un grand nombre de particules de silice et donc une grande surface revêtue pour de faibles concentrations massiques.

La suspension colloïdale de silice, éventuellement aqueuse, peut être commercialement disponible ou bien être une suspension obtenue par mélange d'une solution d'alcool polyvinylique (APV) et de fumée de silice.

L'application de la suspension peut avantageusement s'effectuer par simple mélange avec des grains de base. En séchant, notamment lors d'une étape 3) de séchage, ou au cours d'un traitement thermique (étape 4)), la phase liquide de la suspension colloïdale s'évapore, laissant la silice à la surface des particules. Le procédé de fabrication ne comporte aucune étape intermédiaire entre l'étape 2) et l'étape 3) ou en particulier l'étape 4). En particulier, il ne comporte aucune étape de rinçage ou de lavage ou de traitement chimique.

A l'étape 3), pour que la silice adhère efficacement aux grains de base fondus, le séchage est de préférence effectué à une température supérieure à 60°C, de préférence supérieure à 80°C et/ou inférieure à 200°C, de préférence inférieure à 140°C.

Les grains peuvent être soumis à un traitement thermique (étape 4)) à une température de préférence supérieure à 100°C, 200°C, voire 300°C ou 350°C, et/ou de préférence inférieure à 1550°C, 1350°C, 1000°C, 800°C, 600°C, voire 500°C ou 450°C, pendant une durée de préférence supérieure à 30 minutes, voire 1 heure, voire 2 heures et/ou inférieure à 24 heures, 10 heures, voire 8 heures ou 6 heures.

Un traitement thermique à plus de 450 °C, plus de 500 °C ou plus de 600 °C est également possible.

De préférence, le traitement thermique effectué à l'étape 4) est effectué sur une poudre de grains libres, c'est-à-dire sur une poudre dans laquelle les grains revêtus selon l'invention ne sont pas liés les uns aux autres, notamment au moyen d'une résine.

Une température de traitement thermique d'environ 400°C est particulièrement bien adaptée. Un procédé de fabrication selon l'invention permet ainsi d'obtenir des performances remarquables avec un traitement thermique à une température relativement réduite (en particulier pour les grains AZ et pour les grains Al-MgO ayant subi un traitement thermique préalable).

Le traitement thermique permet d'améliorer l'adhésion et la qualité de l'interface entre le grain de base et le revêtement.

Le grain de base peut en particulier être fabriqué suivant le procédé décrit dans la demande de brevet WO/2004/094554. Dans un mode de réalisation, ce procédé comporte une étape de calcination à plus de 1250°C, voire 1350°C, 1400°C, de préférence pendant plus de 30 minutes.

Dans un mode de réalisation du procédé de fabrication selon la présente invention, l'étape 2) de recouvrement du grain de base par une suspension de silice est effectuée avant tout traitement thermique, et en particulier pour des grains de base décrits dans la demande de brevet WO/2004/094554, avant ladite étape de calcination. L'étape 4) du procédé de fabrication selon l'invention peut alors avantageusement servir d'étape de calcination.

Avantageusement, l'étape de calcination permet alors à la fois d'améliorer considérablement les performances du grain de base, comme décrit dans la demande de brevet susmentionnée, mais aussi, simultanément, d'améliorer la qualité d'accrochage des particules de silice à la surface des grains de base.

Après un broyage éventuel, on peut sélectionner les grains revêtus ayant, suivant la norme FEPA F, un grit compris entre le Grit 12 et le Grit 220, de préférence encore compris entre le Grit 16 et le Grit 120. Ces tailles de grains se sont en effet révélées très efficaces dans une application abrasive.

Le procédé de fabrication selon l'invention est adapté de manière que les grains revêtus obtenus à l'issue de l'étape 3) ou de l'étape 4) soient conformes à l'invention.

L'invention concerne enfin un grain ou un mélange de grains obtenus suivant un procédé de fabrication selon l'invention.

EXEMPLES

Les exemples non limitatifs suivants sont donnés dans le but d'illustrer l'invention.

Les grains de base utilisés ont été élaborés à partir des matières premières suivantes :

- Alumine Bayer® sous-calcinée à teneur en soude inférieure à 0,3 %,
- Poudre de zircone à teneur en zircone+hafnium supérieure à 98%;
- Coke de pétrole;
- Copeaux d'aluminium métallique.

Les grains de base ont été préparés suivant un procédé de fusion classique bien connu de l'homme de l'art.

Des matières premières ont d'abord été dosées de manière à pouvoir fabriquer des grains de base.

Les grains de base AZ présentent l'analyse chimique suivante, en pourcentages en masse : $Al_2O_3$ : 75,0%, $ZrO_2 + HfO_2$ : 24,1 %, $TiO_2$ : 0,1%, $SiO_2 < 0,2\%$, MgO : 0,05%, CaO : 0,07%, Autres < 0,8 %. L'analyse cristallographique et microstructurale révèle que la totalité de la zircone est combinée avec de l'alumine sous forme d'eutectique ; le complément pour l'alumine se trouve sous forme d'alumine alpha.

Les grains de base Al-MgO présentent l'analyse chimique suivante, en pourcentages en masse : $Al_2O_3$ : 95,75%, MgO : 3,6 %, $SiO_2$ : 0,02%, CaO : 0,07%, Autres : < 0,6 %.

A ces matières premières ont été ajoutés au minimum 1% (jusqu'à 3%) de coke de pétrole selon l'état du four et environ 0,5 à 5,5% de copeaux d'aluminium, en pourcentages massiques sur la base de la charge de départ.

La charge de départ a ensuite été fondue dans un four à arc électrique monophasé de type Héroult à électrodes en graphite, avec une cuve de four de 0,8 m de diamètre, une tension de 100 à 150V, une intensité de 1800 à 2200 A et une énergie électrique spécifique fournie de 1,8 à 2,5 kWh/kg chargé.

La matière en fusion a ensuite été brusquement refroidie au moyen d'un dispositif de coulée entre plaques minces métalliques tel que celui présenté dans le brevet US-A-3,993, 119. Les grains fondus ont ensuite été broyés et classés selon leur granulométrie. Les grains fondus présentant des granulométries comprises entre le Grit 12 et le Grit 220 (norme FEPA F) ont été sélectionnés.

Les grains sélectionnés ont ensuite été lavés à l'eau, puis mélangés avec une suspension colloïdale de silice de manière à obtenir un pourcentage PS de silice sur les grains, en pourcentage massique par rapport à la masse des grains de base. Deux suspensions de silice ont été utilisées : une suspension A obtenue par mélange de fumée de silice Aerosil 200 commercialisée par la société Degussa AG à une solution d'alcool polyvinylique (APV) et une suspension C : CabOsperse 2020K fournie par la société Cabot et contenant 20% de silice dispersée en milieu aqueux.

Le mélange a été ensuite éventuellement (TTH : Oui/Non) traité thermiquement à une température Ttth pendant deux heures.

Les grains Al-MgO des exemples 1B, 2B et 3B ont subi un traitement thermique de 4 heures à 1500°C préalablement au lavage et au mélange avec la suspension de silice colloïdale.

Afin de mettre en évidence les propriétés mécaniques des grains, les tests décrits ci-après ont été mis en oeuvre.

Test A : Détermination de la résistance à l'impact et à la fracturation

Le test A vise à déterminer la fraction de grains survivants d'une tranche granulométrique donnée après une sollicitation dans un bol de broyage en acier. Ce test permet une évaluation en dynamique de la résistance mécanique des grains.

Préalablement au test, le mélange de grains est d'abord tamisé sur une tamiseuse vibratoire de type ROTAP®, standard dans l'industrie, de manière à isoler la fraction 1180 / 1400 $\mu$m pour représenter le grain de numéro F16 (Grit 16) selon la norme FEPA, la fraction 1000/1180 $\mu$m pour représenter le grain de numéro F20 (Grit 20), la fraction 710 / 850 $\mu$m pour représenter le grain de numéro F24 (Grit 24), et la fraction 600/710 $\mu$m pour représenter le grain de numéro F30 (Grit 30).

La fraction granulométrique isolée subit ensuite un déferrage par séparation magnétique de manière à extraire le fer métallique symptomatique d'une pollution due au broyage.

Pour le test, on utilise un broyeur tournant Sodemi couramment utilisé pour le broyage de poudres en vue de leur analyse chimique. Ce broyeur est monté en suspension sur 8 ressorts et met en mouvement un bol cylindrique creux contenant des grains à tester, un palet et un anneau libre glissant. Le bol cylindrique de broyage en acier (nuance Z160 C 12) a les dimensions suivantes : hauteur de 50 mm, diamètre intérieur de 139 mm. Le palet est un cylindre plein (diamètre 75 mm, hauteur 45 mm) en acier de la nuance Z200C12 et pèse 1546 grammes. L'anneau cylindrique (diamètre intérieur/extérieur 95/120mm, hauteur 45mm) est en acier de la même nuance Z200C12 et pèse 1464 grammes.

Le test A d'un échantillon comporte alors les étapes suivantes.

1- Nettoyage du bol à l'air comprimé.

2- Un échantillon de 25 grammes de tranche granulométrique du produit à tester est introduit entre la paroi du bol de broyage et le palet. Le broyeur Sodemi est mis en route à sa vitesse nominale (1400 tours/min) pour une durée de 4 secondes. Le produit broyé est ensuite extrait du bol de broyage à l'aide d'un pinceau (n° 50) pour analyse de la répartition granulométrique. Le produit est ensuite tamisé dans une série de tamis de 70 mm de diamètre d'une tamiseuse ROTAP® pendant 3 minutes, avec les tamis $T_i$ suivants :

| N° de grain (Grit) | Tranche Testée | Tamis utilisés (ouvertures en $\mu$m) | | |
|---|---|---|---|---|
| | | T1 | T2 | T3 |
| 16 | 1180/1400 $\mu$m | 1180 | 1000 | 500 |
| 20 | 1000/1180 $\mu$m | 1000 | 850 | 425 |
| 24 | 710/850 $\mu$m | 710 | 425 | 300 |
| 30 | 600/710 $\mu$m | 600 | 500 | 250 |

On appelle T1+T2+T3 la somme des refus, en masse, des tamis T1, T2 et T3 (par exemple d'ouvertures 1180 $\mu$m, 1000 $\mu$m et 500 $\mu$m dans le cas de la tranche 1180/1400 $\mu$m). La valeur de la résistance à l'impact (test A), donnée en pourcent, correspond à la valeur T1+T2+T3 de l'échantillon testé divisé par la valeur T1+T2+T3 de l'échantillon de référence. La résistance à l'impact et à la fracturation sera donc d'autant meilleure que la valeur obtenue au test A est élevée.

L'échantillon de référence est un échantillon lavé à l'eau équivalent à l'échantillon testé mais dont les grains ne sont pas revêtus. L'échantillon de référence est donc un mélange de grains sensiblement identique au mélange des grains de base, lavés et non revêtus, de l'échantillon testé.

Test B : Détermination de l'adhésion entre grains et liant

Le test B consiste à mesurer le module de rupture, ou MOR (en anglais : Modulus Of Rupture) de barrettes constituées de mélanges de grains à tester agglomérés avec un liant organique typique et dont la composition permet de simuler le comportement de meules abrasives. Le MOR de ces barrettes de dimensions 100 x 25 x 10 mm est évalué en flexion trois points, selon la formule

$$\text{MOR (en Mpa)} = (3\ FL) / (2\ e^2 l),$$

où

- F : force en Newtons.
- L : entraxe des rouleaux inférieurs en mm,
- e : épaisseur de la barrette en mm,
- l : largeur de la barrette en mm.

De faibles valeurs de MOR traduisent une tendance à la rupture de l'interface grain / liant et à la friabilité des meules abrasives et correspondent à un mauvais comportement à l'application.

Le résultat obtenu au test B, donné en pourcentage, est obtenu en divisant le MOR de l'échantillon testé par le MOR de l'échantillon de référence correspondant (MOR d'une barrette formée à partir d'un mélange de grains de base, lavés, non revêtus, utilisable pour fabriquer l'échantillon testé (même composition et même taille que les grains de base effectivement utilisés pour fabriquer l'échantillon testé)).

Les résultats sont regroupés dans le tableau 1.

### Tableau 1

| N° exemple | Composition des grain de base | Taille (µm) | Suspension de silice | PS (%) | TTH | Ttth (°C) | Test A (%) | Test B (%) |
|---|---|---|---|---|---|---|---|---|
| 1A | Al-MgO | 710/850 | C | 0,06 | Oui | 1500 | 99 | 130 |
| 1B | Al-MgO | 710/850 | C | 0,06 | Oui | 400 | 100 | 112 |
| 2A | Al-MgO | 600/710 | C | 0,06 | Oui | 1500 | 115 | 113 |
| 2B | Al-MgO | 600/710 | C | 0,06 | Oui | 400 | 118 | 108 |
| 3A | Al-MgO | 1000/1180 | C | 0,06 | Oui | 1500 | 111 | nd |
| 3B | Al-MgO | 1000/1180 | C | 0,06 | Oui | 400 | 112 | nd |
| 4 | AZ | 1180/1400 | C | 0,03 | Oui | 500 | 96 | 116 |
| 5 | AZ | 1180/1400 | C | 0,3 | Oui | 400 | 104 | nd |
| 6 | AZ | 1180/1400 | C | 0,75 | Oui | 400 | 104 | nd |
| 7 | AZ | 1180/1400 | C | 2,0 | Oui | 400 | 105 | nd |
| 8 | AZ | 1180/1400 | C | 0,03 | Non | / | nd | 121 |
| 9 | AZ | 1180/1400 | C | 0,1 | Oui | 400 | 103 | 129 |
| 10 | AZ | 1180/1400 | A | 0,3 | Oui | 400 | 107 | nd |
| 11 | AZ | 1180/1400 | A | 0,03 | Oui | 500 | 93 | 123 |
| 12 | AZ | 1180/1400 | A | 0,03 | Oui | 600 | nd | 122 |
| 13 | AZ | 1180/1400 | A | 0,03 | Oui | 800 | 76 | 123 |

Dans le tableau 1, « nd » signifie « non déterminé »

Les résultats montrent que les produits de l'invention testés ont un comportement amélioré vis-à-vis du test B et un comportement équivalent ou amélioré vis-à-vis du test A.

Il apparaît à la lecture du tableau 1 que le traitement thermique préalable des grains de base Al-MgO peut être évité : les résultats de l'exemple 1A sont en effet similaires à ceux de l'exemple 1B ; de même pour les exemples 2A et 2B, et 3A et 3B. Il est économiquement avantageux d'obtenir ces grains améliorés avec un seul traitement thermique.

Pour les grains de base autres que Al-MgO, en particulier pour les grains de base Alumine-Zircone, un traitement thermique peut cependant être avantageux.

Le tableau 1 montre que des effets avantageux, éventuellement sur un seul des deux tests A et B, sont obtenus avec un pourcentage PS de silice sur les grains de base très faible, et en particulier pour des valeurs de PS supérieures ou égales à 0,03 %.

L'exemple 8 montre qu'un traitement thermique n'est pas toujours indispensable pour obtenir une amélioration de l'adhésion des grains.

Une comparaison des exemples 11 à 13 montre que, pour les grains AZ testés, une élévation de la température de traitement thermique au-delà de 400°C n'améliore pas les résultats au test B. En outre, les résultats au test A se dégradent significativement avec l'augmentation de cette température de traitement thermique. Une température de traitement thermique inférieure à 500°C, voire inférieure à 450°C apparaît préférable. Sa ns être liés par cette théorie, les inventeurs expliquent ce phénomène par le fait qu'un traitement thermique à une température trop élevée, en particulier pour les grains alumine-zircone, pourrait entraîner un frittage du revêtement de silice s'accompagnant d'un retrait et de l'apparition de craquelures dans le revêtement et/ou des transformations de phases de la zircone affectant les propriétés du grain.

Avec des grains Al-MgO traités thermiquement avant application du revêtement de silice, un traitement thermique à une température supérieure à 500°C n'apparaît pas nécessaire.

Bien entendu, la présente invention n'est pas limitée aux modes de réalisation fournis à titre d'exemples illustratifs.

**Revendications**

1. Grain abrasif revêtu comportant un grain de base fondu recouvert, de manière sensiblement uniforme, par un revêtement constitué à 100% de silice hydrophile en pourcentage massique sur la base de la masse du revêtement, le grain de base comportant plus de 40 % d'alumine, en pourcentage massique sur la base de la masse du grain de base, ledit grain abrasif revêtu étant obtenu par un procédé comportant les étapes successives suivantes :

   1) obtention ou fabrication d'un grain de base fondu comportant plus de 40% d'alumine, en pourcentage massique sur la base de la masse du grain de base,
   2) recouvrement dudit grain de base par une suspension colloïdale de silice,
   3) séchage du grain de base mouillé par la suspension de manière à former un revêtement à base de silice,
   4) optionnellement, traitement thermique à une température supérieure à 100 °C et inférieure à 1550 °C,

   le grain de base fondu ne subissant aucune étape intermédiaire entre l'étape 2) et l'étape 3),
   le grain de base présentant une des analyses chimiques suivantes, en pourcentages en masse et pour un total de 100 % :

   | | |
   |---|---|
   | $Al_2O_3$ : | 45-65 % |
   | $ZrO_2$+$HfO_2$ : | 35-50 % |
   | Autres : | 0-12 % |

   ou

   | | |
   |---|---|
   | $Al_2O_3$ : | 65 - 80 % |
   | $ZrO_2$+$HfO_2$: | 15 -30 % |
   | Autres: | 0 - 12,0 % |

   ou

   | | |
   |---|---|
   | $Al_2O_3$ : | 92,0-98,5 % |
   | MgO : | 1,5-6,5 % |
   | Autres : | < 2,0 %. |

2. Grain revêtu selon la revendication précédente, dans lequel le revêtement est obtenu à partir d'une suspension de silice aqueuse.

3. Grain revêtu selon l'une quelconque des revendications précédentes, dans lequel la masse du revêtement représente plus de 0,01% et moins de 2% de la masse du grain de base.

4. Grain revêtu selon la revendication précédente, dans lequel la masse du revêtement représente plus de 0,1% et moins de 0,75% de la masse du grain de base.

5. Grain revêtu selon l'une quelconque des revendications précédentes, dans lequel la masse du revêtement représente moins de 0,3% de la masse du grain de base.

6. Grain revêtu selon l'une quelconque des revendications précédentes, dans lequel le grain de base comporte au moins 1 % de zircone, de magnésie ou d'un mélange de zircone et de magnésie, en pourcentage massique sur la base de la masse du grain de base.

7. Grain revêtu selon l'une quelconque des revendications précédentes, le grain de base étant obtenu par un procédé comportant les étapes successives suivantes :

   a) mélange de matières premières ;
   b) fusion desdites matières premières mélangées jusqu'à obtention d'une matière en fusion ;
   c) refroidissement par trempe de ladite matière en fusion jusqu'à obtention d'une masse solide ;

d) broyage de ladite masse solide de manière à obtenir un grain de base fondu.

8. Outil abrasif comportant des grains abrasifs liés par un liant, agglomérés ou déposés sur un support, au moins une partie desdits grains abrasifs étant conformes à l'une quelconque des revendications précédentes.

9. Procédé de fabrication de grains revêtus, comprenant les étapes successives suivantes :

1) obtention ou fabrication de grains de base fondus comportant plus de 40 % d'alumine, en pourcentage massique sur la base de la masse du grain de base,
le grain de base présentant une des analyses chimiques suivantes, en pourcentages en masse et pour un total de 100 % :

$Al_2O_3$ :        45-65 %
$ZrO_2$+$HfO_2$ :   35-50 %
Autres :          0-12 %

ou

$Al_2O_3$ :        65 - 80 %
$ZrO_2$+$HfO_2$ :   15 -30 %
Autres :          0 - 12,0 %

ou

$Al_2O_3$ :        92,0-98,5 %
MgO :             1,5-6,5 %
Autres :          < 2,0 %;

2) recouvrement desdits grains de base par une suspension colloïdale, de préférence aqueuse, contenant de la silice ;
3) séchage des grains de base mouillés par ladite suspension de manière à former un revêtement à base de silice.
4) optionnellement, traitement thermique à une température supérieure à 100 °C et inférieure à 1550 °C,

de manière que les grains revêtus obtenus à l'issue de l'étape 3), ou le cas échéant de l'étape 4), soient conformes à l'une quelconque des revendications 1 à 7.

10. Procédé selon la revendication précédente, ledit traitement thermique étant effectué à une température supérieure à 300 °C et inférieure à 500 °C.

11. Procédé selon l'une quelconque des revendications 9 à 10, dans lequel les grains de base fondus subissent une étape de traitement thermique préalable, avant l'étape 2), à une température supérieure à 600 °C et inférieure à 1550 °C.

12. Procédé selon la revendication précédente, ledit traitement thermique préalable étant effectué à une température supérieure à 800°C et inférieure à 1350 °C.

13. Procédé selon l'une quelconque des revendications 9 à 10, dans lequel les grains de base fondus ne subissent aucune étape de traitement thermique préalablement à l'étape 2).

**Patentansprüche**

1. Beschichtetes Schleifkorn enthaltend eine geschmolzenes und, auf in Wesentlichem gleichförmige Weise, mit einer Beschichtung gebildet aus 100 % hydrophilem Siliziumoxid in Massen-Prozentangabe auf Basis der Masse der Beschichtung umhülltes Basiskorn, wobei das Basiskorn mehr als 40 % Aluminiumoxid enthält, in Massen-Prozentangabe auf Basis der Masse des Basiskorns, wobei das besagte beschichtete Schleifkorn erhalten ist durch ein Verfahren enthaltend die folgenden aufeinanderfolgenden Schritte:

1) Erhalten oder Herstellen eines geschmolzenen Basiskorns enthaltend mehr als 40 % Aluminiumoxid, in Massen-Prozentangabe auf Basis der Masse des Basiskorns,

2) Umhüllen des besagten Basiskorns mit einer kolloidalen Suspension von Siliziumdioxid,

3) Trocknen des durch die Suspension feuchten Basiskorns um eine Beschichtung auf Basis von Siliziumdioxid zu bilden,

4) optional, thermische Behandlung bei einer Temperatur von größer als 100 °C und geringer als 1550 °C,

wobei das geschmolzene Basiskorn keinen Zwischenschritt zwischen dem Schritt 2) und dem Schritt 3) erfährt, wobei das Basiskorn eine der folgenden chemischen Analysen aufweist, in Massenprozenten und für eine Summe von 100 %:

| | |
|---|---|
| $Al_2O_3$: | 45 - 65 % |
| $ZrO_2$ + $HfO_2$: | 35 - 50 % |
| Andere: | 0 - 12 % |

oder

| | |
|---|---|
| $Al_2O_3$: | 65 - 80 % |
| $ZrO_2$ + $HfO_2$: | 15 - 30 % |
| Andere: | 0 - 12,0 % |

oder

| | |
|---|---|
| $Al_2O_3$: | 92,0 - 98,5 % |
| MgO: | 1,5 - 6,5 % |
| Andere: | < 2,0 %. |

2. Beschichtetes Korn nach dem vorhergehenden Anspruch, wobei die Beschichtung erhalten ist ausgehend von einer wässrigen Suspension von Siliziumdioxid.

3. Beschichtetes Korn nach irgend einem der vorhergehenden Ansprüche, wobei die Masse der Beschichtung mehr als 0,01 % und weniger als 2 % der Masse des Basiskorns darstellt.

4. Beschichtetes Korn nach dem vorhergehenden Anspruch, wobei die Masse der Beschichtung mehr als 0,1 % und weniger als 0,75 % der Masse des Basiskorns darstellt.

5. Beschichtetes Korn nach irgend einem der vorhergehenden Ansprüche, wobei die Masse der Beschichtung weniger als 0,3 % der Masse des Basiskorns darstellt.

6. Beschichtetes Korn nach irgend einem der vorhergehenden Ansprüche, wobei das Basiskorn mindestens 1 % Zirkoniumoxid, Magnesiumoxid oder eine Mischung aus Zirkoniumoxid und Magnesiumoxid enthält, in Massen-Prozentangabe auf Basis der Masse des Basiskorns.

7. Beschichtetes Korn nach irgend einem der vorhergehenden Ansprüche, wobei das Basiskorn erhalten ist durch ein Verfahren enthaltend die folgenden aufeinanderfolgenden Schritte:

a) Mischen von ersten Materien;

b) Schmelzen der besagten ersten gemischten Materien bis zum Erhalt einer Materie in Schmelze;

c) Erkalten durch Abschrecken der besagten Materie in Schmelze bis zum Erhalt einer festen Masse;

d) Zerkleinerung der besagten festen Masse um ein geschmolzenes Basiskorn zu erhalten.

8. Schleifwerkzeug enthaltend durch ein Bindemittel gebundene, agglomerierte oder auf einen Träger aufgebrachte Schleifkörner, wobei mindestens ein Teil der besagten Schleifkörner gemäß irgend einem der vorhergehenden Ansprüche ist.

9. Verfahren zur Herstellung von beschichteten Körnern, enthaltend die folgenden aufeinanderfolgenden Schritte:

1) Erhalten oder Herstellen geschmolzener Basiskörner enthaltend mehr als 40 % Aluminiumoxid, in Massen-Prozentangabe auf Basis der Masse des Basiskorns;
Wobei das Basiskorn eine der folgenden chemischen Analysen aufweist, in Massenprozenten und für eine Summe von 100 %:

| $Al_2O_3$: | 45 - 65 % |
|---|---|
| $ZrO_2 + HfO_2$: | 35 - 50 % |
| Andere: | 0 - 12 % |

oder

| $Al_2O_3$: | 65 - 80 % |
|---|---|
| $ZrO_2 + HfO_2$: | 15 - 30 % |
| Andere: | 0 - 12,0 % |

oder

| $Al_2O_3$: | 92,0 - 98,5 % |
|---|---|
| MgO: | 1,5 - 6,5 % |
| Andere: | < 2,0 % |

2) Umhüllen der besagten Basiskörner mit einer kolloidalen, vorzugsweise wäßrigen Suspension enthaltend Siliziumdioxid;
3) Trocknen der durch die Suspension feuchten Basiskörner um eine Beschichtung auf Basis von Siliziumdioxid zu bilden.
4) optional, thermische Behandlung bei einer Temperatur von größer als 100 °C und geringer als 1550 °C,

so dass die beschichteten Körner erhalten am Ende des Schrittes 3), oder gegebenenfalls des Schrittes 4), gemäß irgend einem der Ansprüche 1 bis 7 sind.

10. Verfahren nach dem vorhergehenden Anspruch, wobei die besagte thermische Behandlung bei einer Temperatur von größer als 300 °C und geringer als 500 °C durchgeführt wird.

11. Verfahren nach irgend einem der Ansprüche 9 bis 10, wobei die besagten geschmolzenen Basiskörner einen Schritt einer vorherigen thermischen Behandlung erfahren, vor dem Schritt 2), bei einer Temperatur von größer als 600 °C und geringer als 1550 °C.

12. Verfahren nach dem vorhergehenden Anspruch, wobei die besagte vorherige thermische Behandlung bei einer Temperatur von größer als 800 °C und geringer als 1350 °C durchgeführt wird.

13. Verfahren nach irgend einem der Ansprüche 9 bis 10, wobei die besagten geschmolzenen Basiskörner keinen Schritt einer thermischen Behandlung vor dem Schritt 2) erfahren.

**Claims**

1. A coated abrasive grain comprising a fused base grain covered, substantially uniformly, with a coating constituted for 100% of hydrophilic silica as a percentage by weight on the basis of the weight of the coating, the base grain comprising more than 40% of alumina, as a percentage by weight based on the weight of the base grain, said abrasive grain being obtained by a process comprising the following successive steps:

1) obtaining or producing a fused base grain comprising more than 40% of alumina, as a percentage by weight based on the weight of the base grain;

2) coating said base grain with a colloidal suspension of silica;

3) drying the base grain wetted by said suspension in order to form a coating based on silica;

4) optionally, heat treatment at a temperature of greater than 100°C and less than 1550°C,

the fused base grain not undergoing any intermediate step between step 2) and step 3),

the base grain having one of the following chemical analyses, as percentages by weight for a total of 100%:

| | |
|---|---|
| $Al_2O_3$: | 45 - 65% |
| $ZrO_2$+$HfO_2$: | 35 - 50% |
| Others: | 0 - 12% |

or

| | |
|---|---|
| $Al_2O_3$: | 65 - 80% |
| $ZrO_2$+$HfO_2$: | 15 - 30% |
| Others: | 0 - 12.0% |

or

| | |
|---|---|
| $Al_2O_3$: | 92.0 - 98.5% |
| MgO: | 1.5 - 6.5% |
| Others: | < 2.0%. |

2. A coated grain according to the preceding claim,
   wherein the coating is obtained from a suspension of aqueous silica.

3. A coated grain according to any preceding claim,
   wherein the weight of the coating represents more than 0.01% and less than 2% of the weight of the base grain.

4. A coated grain according to the preceding claim,
   wherein the weight of the coating represents more than 0.1% and less than 0.75% of the weight of the base grain.

5. A coated grain according to any preceding claim,
   wherein the weight of the coating represents less than 0.3% of the weight of the base grain.

6. A coated grain according to any preceding claim,
   wherein the base grain comprises at least 1% of zirconia, magnesia or a mixture of zirconia and magnesia, as a percentage by weight based on the weight of the base grain.

7. A coated grain according to any preceding claim, the base grain being obtained by a process comprising the following steps in succession:

   a) mixing raw materials;
   b) melting of said mixed raw material until obtaining a molten material;
   c) cooling by quenching of said molten material until a solid material is obtained;
   d) crushing of said solid material such as to obtain a fused based grain.

8. An abrasive tool comprising abrasive grains bonded by a binder, agglomerated or deposited on a support, at least a portion of said abrasive grains being in accordance with any preceding claim.

9. A method of producing coated grains comprising the following steps in succession:

   1) obtaining or producing fused base grains comprising more than 40% of alumina, as a percentage by weight based on the weight of the base grain;

the base grain having one of the following chemical analyses, as percentages by weight for a total of 100%:

| | |
|---|---|
| $Al_2O_3$: | 45 - 65% |
| $ZrO_2+HfO_2$: | 35 - 50% |
| Others: | 0 - 12% |

or

| | |
|---|---|
| $Al_2O_3$: | 65 - 80% |
| $ZrO_2+HfO_2$: | 15 - 30% |
| Others: | 0 - 12.0% |

or

| | |
|---|---|
| $Al_2O_3$: | 92.0 - 98.5% |
| MgO: | 1.5 - 6.5% |
| Others: | < 2.0%. |

2) coating said base grains with a colloidal suspension, preferably aqueous, containing silica;
3) drying the base grains wetted by said suspension in order to form a coating based on silica;
4) optionally, heat treatment at a temperature greater than 100°C and less than 1550°C,

such that the coated grains obtained at the end of step 3), or if appropriate step 4), accord to any one of claims 1 to 7.

10. A method according to the preceding claim, said heat treatment being carried out at a temperature of greater than 300°C and smaller than 500°C.

11. A method according to any one of claims 9 to 10, wherein the fused base grains undergo a prior heat treatment step before step 2) at a temperature of greater than 600°C and smaller than 1550°C.

12. A method according to the preceding claim, said prior heat treatment being carried out at a temperature of greater than 800°C and smaller than 1350°C.

13. A method according to any one of claims 9 to 10, wherein the fused base grains do not undergo any heat treatment steps prior to step 2).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3181939 A
- US 3891408 A
- US 4457767 A
- EP 1613709 A
- US 3993119 A
- US 5042991 A
- WO 2006032982 A
- US 3525600 A
- US 2006134421 A
- US 4913708 A
- EP 0856037 A
- EP 0417729 A
- JP 63098299 A
- US 3029160 A
- WO 2004094554 A